# EUROPÄISCHE PATENTANMELDUNG

(11) **EP 0 674 103 A2**
(43) Veröffentlichungstag der Anmeldung: **27.09.1995**
(21) Anmeldenummer: 95100789.7
(22) Anmeldetag: 20.01.1995
(51) Int. Cl.: F02P 17/12, G01L 23/22

(54) **Verfahren zur Erkennung klopfender Verbrennung bei einer Brennkraftmaschine mit einer Hochspannungstransistorspulenzündeinrichtung**

(30) Priorität: 22.03.1994 DE 4409749
(71) Anmelder: Bayerische Motoren Werke Aktiengesellschaft, 80788 München (DE)
(72) Erfinder: Krämer, Gerd, D-82065 Baierbrunn (DE)
(74) Vertreter: Dirscherl, Josef

(57) **Zusammenfassung**

Bei einem Verfahren zur Erkennung klopfender Verbrennung bei einer Brennkraftmaschine mit einer Hochspannungstransistorspulenzündeinrichtung und mit einer Ionenstromerfassungseinrichtung zum Erfassen des Ionenstromes an der bzw. an einer der Zündkerzen der Brennkraftmaschine, bei dem klopfende Verbrennung erkannt wird, wenn der gemessene Ionenstrom einen vorgegebenen Pegel überschreitet, wird die Funkendauer des Zündfunkens der jeweiligen Zündkerze oberhalb des Teillastbereichs der Brennkraftmaschine auf eine vorbestimmte Zeit seit dem Zündzeitpunkt bzw. auf eine einem vorbestimmten Kurbelwinkel seit dem Zündzeitpunkt entsprechende Zeit begrenzt. Erst nach dem eigentlichen Zündfunken wird dann der Ionenstrom gemessen.

## Beschreibung

Die Erfindung betrifft ein Verfahren zur Erkennung klopfender Verbrennung bei einer Brennkraftmaschine mit einer Hochspannungstransistorspulenzündeinrichtung und mit einer Ionenstromerfassungseinrichtung zum Erfassen des Ionenstroms an der bzw. an einer der Zündkerzen der Brennkraftmaschine, bei dem klopfende Verbrennung erkannt wird, wenn der gemessene Ionenstrom einen vorgegebenen Pegel überschreitet.

Bei herkömmlichen Verfahren zur Erkennung klopfender Verbrennung bei einer Brennkraftmaschine mit einer Hochspannungstransistorspulenzündeinrichtung werden die Körperschallschwingungen der Brennkraftmaschine mit Hilfe von Klopfdetektoren in Form von Beschleunigungsmessern, die den einzelnen Zylindern zugeordnet sind, aufgenommen. Diese Körperschallsignale werden dann einer Frequenzanalyse unterzogen, um die Klopfgeräusche detektieren zu können. Ein Nachteil dieses bekannten Verfahrens besteht darin, daß zum einen teuere Klopfsensoren benötigt werden und daß zum anderen eine aufwendige Frequenzanalyse erforderlich ist, um die übrigen Brennkraftmaschinengeräusche und Schwingungen von den Geräuschen und Schwingungen, die auf eine klopfende Verbrennung zurückzuführen sind, zu selektieren.

Aus der DE 42 39 592 A1 ist ferner bereits ein Verfahren zur Erkennung klopfender Verbrennung bei einer Brennkraftmaschine mit einer Hochspannungstransistorspulenzündeinrichtung bekannt, bei dem mit Hilfe einer Ionenstromerfassungseinrichtung der Ionenstrom an der bzw. an einer der Zündkerzen der Brennkraftmaschine erfaßt wird und bei dem klopfende Verbrennung erkannt wird, wenn der gemessene Ionenstrom einen vorgegebenen Pegel überschreitet.

Ein entscheidender Nachteil dieses bekannten Verfahrens zur Erkennung klopfender Verbrennung besteht darin, daß der Ionenstrom an der bzw. an einer der Zündkerzen der Brennkraftmaschine während des Zündfunkens gemessen wird, weil dadurch die Ionenstrommessung durch den Funkenschwanz des Zündfunkens stark verfälscht wird, so daß es nahezu unmöglich ist, eine klopfende Verbrennung zu erkennen. Daß die Ionenstrommessung während des Zündfunkens durchgeführt wird, ist darauf zurückzuführen, daß die Ionenstrommessung kurz nach der Entflammungsphase, d. h. ca. 0,5 bis 1,5 ms nach Beginn des Zündfunkens durchgeführt werden muß, um überhaupt klopfende Verbrennung erkennen zu können und daß die Funkendauer eines durch eine Hochspannungstransistorspulenzündeinrichtung erzeugten Zündfunkens ca. 1 bis 2 ms beträgt.

Von der Firma Saab ist das Problem, daß während des Zündfunkens eine im Hinblick auf die Erkennung klopfender Verbrennung aussagekräftige Ionenstrommessung nicht möglich ist, bereits erkannt worden. Die Firma Saab hat versucht, dieses Problem dadurch zu lösen, daß sie bei den von ihr gefertigten Brennkraftmaschinen keine Hochspannungstransistorspulenzündeinrichtung sondern eine Hochspannungskondensatorzündeinrichtung verwendet, bei der die Zündfunken eine etwa um den Faktor 10 kürzere Funkendauer als die von einer Hochspannungstransistorspulenzündeinrichtung erzeugten Zündfunken aufweisen. Bei Verwendung einer Hochspannungskondensatorzündeinrichtung braucht die Ionenstrommessung nicht während des Zündfunkens durchgeführt werden, sie kann vielmehr auch nach Ende des nur 0,1 bis 0,2 ms langen Zündfunkens erfolgen. Dieses Verfahren hat zwar den Vorteil, daß der Ionenstrom sehr genau gemessen werden kann und damit eine Erkennung klopfender Verbrennung sehr gut möglich ist. Ein Nachteil dieses bekannten Verfahrens liegt darin, daß es nur bei einer Brennkraftmaschine mit einer Hochspannungskondensatorzündeinrichtung angewandt werden kann. Eine Hochspannungskondensatorzündeinrichtung hat jedoch den gravierenden Nachteil, daß das von der Brennkraftmaschine angesaugte Gemisch aufgrund des sehr kurzen Zündfunkens im Teillastbereich bei hohen Restgasgehalten oder im Magerbetrieb der Brennkraftmaschine nur sehr schwer entzündet werden kann, was Zündaussetzer zur Folge hat.

Es ist daher Aufgabe der Erfindung, ein Verfahren eingangs genannter Art derart weiterzubilden, daß auch bei einer Brennkraftmaschine mit einer Hochspannungstransistorspulenzündeinrichtung eine sehr genaue Ionenstrommessung und damit mit geringem technischen Aufwand eine sichere Erkennung von klopfender Verbrennung möglich ist.

Diese Aufgabe wird erfindungsgemäß dadurch gelöst, daß die Funkendauer des Zündfunkens der jeweiligen Zündkerze oberhalb des Teillastbereiches der Brennkraftmaschine auf eine vorbestimmte Zeit seit dem Zündzeitpunkt bzw. auf eine einem vorbestimmten Kurbelwinkel seit dem Zündzeitpunkt entsprechende Zeit begrenzt wird und daß der Ionenstrom nach dem eigentlichen Zündfunken gemessen wird.

Durch das erfindungsgemäße Verfahren wird erreicht, daß auch bei einer Brennkraftmaschine mit einer Hochspannungstransistorspulenzündeinrichtung eine Ionenstrommessung an der bzw. an einer der Zündkerzen der Brennkraftmaschine so genau und störungsfrei möglich ist, daß eine sichere Erkennung von klopfender Verbrennung gewährleistet ist. Es wird damit durch die Erfindung erreicht, daß einerseits während des Teillastbetriebes der Brennkraftmaschine eine sichere und aussetzerfreie Verbrennung gewährleistet ist, da aufgrund des durch eine Hochspannungstransistorspulenzündeinrichtung erzeugten langen Zündfunkens eine sichere Entzündung des Gemisches im Teillastbereich der Brennkraftmaschine gewährleistet ist. Durch die Erfindung wird andererseits mit geringem technischen Aufwand eine sichere Erkennung klopfender Verbrennung im Vollastbetrieb der Brennkraftmaschine gewährleistet, da in diesem Betriebsbereich der Brennkraftmaschine die Funkendauer des Zündfunkens auf eine vorbestimmte Zeit seit dem Zündzeitpunkt bzw. auf eine einem vorbestimmten Kurbelwinkel seit dem Zündzeitpunkt entsprechende Zeit begrenzt wird. In diesem Betriebsbereich ist eine Begrenzung der Funkendauer unkritisch, da im Vollastbereich bessere Entflammungsbedingungen vorliegen als im Teillastbereich. Es wird damit erreicht, daß in dem im Hinblick auf klopfende Verbrennung kritischen Betriebsbereich der Brennkraftmaschine der Ionenstrom nach dem eigentlichen Zündfunken gemessen wird und damit unbeeinflußt durch den Funkenschwanz des Zündfunkens sicher im Hinblick auf die Erkennung klopfender Verbrennung ausgewertet werden kann.

Gemäß einer vorteilhaften Weiterbildung des erfindungsgemäßen Verfahrens wird die Funkendauer des Zündfunkens der jeweiligen Zündkerze mit steigender Last der Brennkraftmaschine auf eine zunehmend kürzere Zeit seit dem Zündzeitpunkt bzw. auf eine einem zunehmend kleineren Kurbelwinkel seit dem Zündzeitpunkt entsprechende Zeit begrenzt. Es wird damit eine kontinuierliche Verkürzung der Funkendauer mit zunehmender Klopfneigung und damit zunehmender Wichtigkeit einer sicheren Klopferkennung erreicht.

Vorzugsweise erfolgt bei dem erfindungsgemäßen Verfahren die Begrenzung der Funkendauer durch kurzzeitiges Verbinden des ansonsten mit dem Hochspannungsanschluß der jeweiligen Zündkerze verbundenen Anschlusses der Zündspule mit Erdpotential.

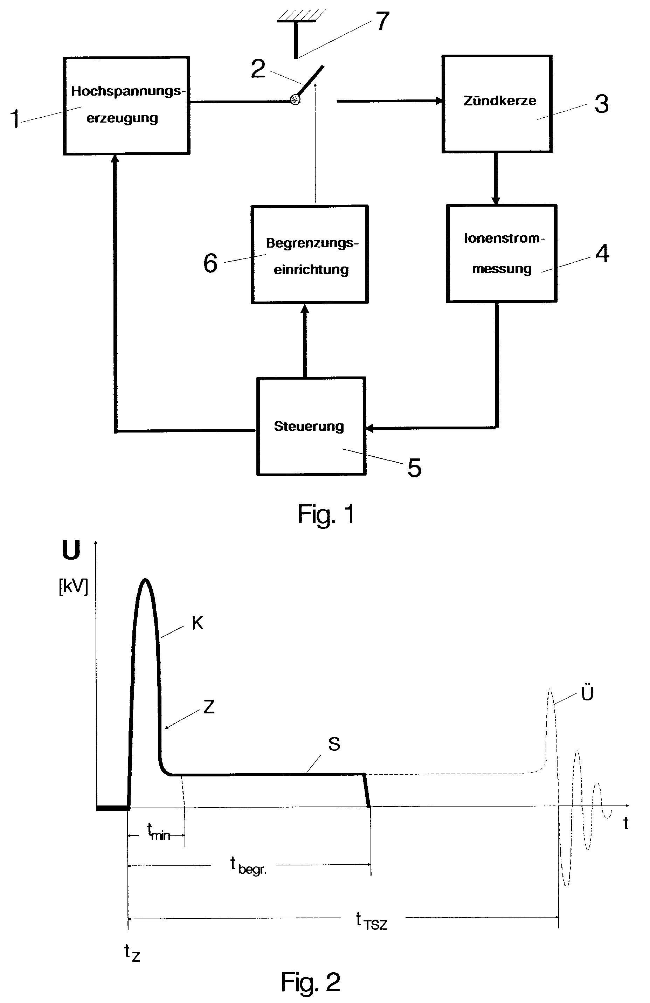

Im folgenden wird das erfindungsgemäße Verfahren anhand der Fig. 1 und 2 näher erläutert.

Es zeigen
- Fig. 1: eine Einrichtung zur Durchführung des erfindungsgemäßen Verfahrens und
- Fig. 2: einen typischen Verlauf der bei einem durch eine Hochspannungstransistorspulenzündeinrichtung erzeugten Zündfunken zwischen den Zündkerzenelektroden auftretenden Zündspannung.

Bei der in Fig. 1 dargestellten Einrichtung zur Durchführung des erfindungsgemäßen Verfahrens wird die für die Zündung des brennbaren Gemisches der in der Figur nicht dargestellten Brennkraftmaschine erforderliche Zündspannung mit Hilfe einer Hochspannungstransistorspulenzündeinrichtung 1 erzeugt. Diese Zündspannung wird über das Schalterelement 2 der Zündkerze 3 zugeführt. Die Zündkerze 3 ist ferner mit einer Ionenstrommeßeinrichtung 4 verbunden. Von dieser wird der jeweilige Meßwert des zwischen den beiden Zündkerzenelektroden fließenden Ionenstromes zur Brennkraftmaschinensteuereinheit 5 weitergeleitet. Diese steuert zum einen die Hochspannungstransistorspulenzündeinrichtung und zum anderen eine Begrenzungseinrichtung 6, durch die das Schalterelement 2 von der Zündkerze getrennt und mit Erdpotential 7 verbunden werden kann.

Durch die in Fig. 1 dargestellte Einrichtung ist aufgrund der Verwendung einer Hochspannungstransistorspulenzündeinrichtung als Hochspannungserzeugungseinrichtung gewährleistet, daß im Teillastbetrieb der Brennkraftmaschine für die sichere Entzündung eines mageren Gemisches erforderliche ausreichend lange Zündfunken erzeugt werden. Aufgrund der Länge der Zündfunken kann jedoch in diesem Betriebsbereich der Brennkraftmaschine durch eine Ionenstrommessung eine klopfende Verbrennung nur sehr schwer detektiert werden, da der zwischen den beiden Elektroden der Zündkerzen fließende Ionenstrom durch den aufgrund der Zündspannung zusätzlich fließenden Strom überlagert wird. Da eine sichere Klopferkennung jedoch nur im Vollastbetrieb der Brennkraftmaschine erforderlich ist, kann gemäß dem erfindungsgemäßen Verfahren im Teillastbereich der energiereiche und lange Zündfunken zu einer sicheren Zündung des Brenngemisches genützt werden. Im Vollastbetrieb, d. h. oberhalb des Teillastbereiches der Brennkraftmaschine wird erfindungsgemäß dann die Funkendauer des Zündfunkens auf eine vorbestimmte Zeit t_{begr.} seit dem Zündzeitpunkt begrenzt und der Ionenstrom erst nach dem eigentlichen Zündfunken gemessen. Dieser dann nicht durch den durch die Zündspannung zusätzlich hervorgerufenen Strom zwischen den Elektroden der Zündkerze überlagerte Ionenstrom wird dann in der Brennkraftmaschinensteuereinheit 5 mit einem vorgegebenen Strompegel verglichen. Wenn der durch die Ionenstrommeßeinrichtung 4 gemessene Ionenstrom den vorgegebenen Pegel überschreitet, dann wird eine klopfende Verbrennung der Brennkraftmaschine erkannt. Es können dann klopfreduzierende Maßnahmen durch die Brennkraftmaschinensteuereinheit 5 eingeleitet werden.

In Fig. 2 ist ein durch die Hochspannungstransistorspulenzündeinrichtung 1 von Fig. 1 erzeugter Verlauf der Zündspannung U zwischen den Zündkerzenelektroden der Zündkerze 3 von Fig. 1 dargestellt. Wie der Fig. 2 zu entnehmen ist, wird zum Zündzeitpunkt t_{Z} die Zündspannung U bis auf den Maximalwert des Funkenkopfes K aufgebaut. Dieser Maximalwert liegt etwa im Bereich von 25 bis 50 kV. Nach dem Funkenüberschlag fällt die Zündspannung U innerhalb der Zeitspanne tₘᵢₙ wieder steil ab und verharrt den größten Teil der Funkendauer t_{TSZ} des Zündfunkens Z weitgehend konstant auf dem niedrigeren Zündspannungsniveau des Funkenschwanzes S. Erst gegen Ende des Funkenschwanzes S treten wieder einige Überschwinger Ü auf.

Die Zündzeit t_{TSZ} einer üblichen Hochspannungstransistorspulenzündeinrichtung beträgt etwa 1 bis 2 ms. Da jedoch die Ionenstrommessung zur Erkennung von klopfender Verbrennung kurz nach der Entflammungsphase, also etwa zwischen 0,5 und 1,5 ms nach Beginn des Zündfunkens Z durchgeführt werden muß, wird der zwischen den beiden Zündkerzenelektroden fließende Ionenstrom durch den durch die verbleibende Zündspannung U hervorgerufenen Stromfluß überlagert und damit verfälscht, so daß eine sichere Erkennung von klopfender Verbrennung durch einen Vergleich des gemessenen Stromes mit einem vorgegebenen Pegel nicht möglich ist.

Um jedoch klopfende Verbrennung aufgrund eines Vergleichs des gemessenen Ionenstroms mit einem vorgegebenen Pegel sicher erkennen zu können, ist es erforderlich, im Vollastbetrieb der Brennkraftmaschine, bei dem klopfende Verbrennung überhaupt erst auftreten kann, den durch den Funkenschwanz S des Zündfunkens Z hervorgerufenen Stromfluß zwischen den beiden Zündkerzenelektroden zu beseitigen. Dies erfolgt gemäß dem erfindungsgemäßen Verfahren dadurch, daß die Funkendauer des Zündfunkens Z der jeweiligen Zündkerze oberhalb des Teillastbereiches der Brennkraftmaschine auf eine vorbestimmte Zeit, nämlich t_{begr.} seit dem Zündzeitpunkt t_{Z} begrenzt wird und daß der zwischen den Zündkerzenelektroden fließende Ionenstrom erst nach dem eigentlichen Zündfunken Z gemessen wird. Es ist damit gewährleistet, daß der Ionenstrom keinen größeren Störeinflüssen ausgesetzt ist. Es kann dadurch durch einfachen Vergleich des gemessenen Ionenstroms mit einem vorgegebenen Pegel erkannt werden, ob eine klopfende Verbrennung vorliegt oder nicht.

Zusammenfassend kann festgestellt werden, daß es durch das erfindungsgemäße Verfahren erst möglich ist, bei einer Hochspannungstransistorspulenzündeinrichtung eine klopfende Verbrennung der Brennkraftmaschine durch Messung und Auswertung des Ionenstroms sicher zu erkennen.

## Patentansprüche

1. Verfahren zur Erkennung klopfender Verbrennung bei einer Brennkraftmaschine mit einer Hochspannungstransistorspulenzündeinrichtung und mit einer Ionenstromerfassungseinrichtung zum Erfassen des Ionenstroms an der bzw. an einer der Zündkerzen der Brennkraftmaschine, bei dem klopfende Verbrennung erkannt wird, wenn der gemessene Ionenstrom einen vorgegebenen Pegel überschreitet,
dadurch gekennzeichnet, daß die Funkendauer (t_{TSZ}) des Zündfunkens (Z) der jeweiligen Zündkerze (3) oberhalb des Teillastbereichs der Brennkraftmaschine auf eine vorbestimmte Zeit (t_{begr.}) seit dem Zündzeitpunkt (t_{Z}) bzw. auf eine einem vorbestimmten Kurbelwinkel seit dem Zündzeitpunkt (t_{Z}) entsprechende Zeit (t_{begr.}) begrenzt wird und daß der Ionenstrom nach dem eigentlichen Zündfunken (Z) gemessen wird.

2. Verfahren nach Anspruch 1,
dadurch gekennzeichnet, daß die Funkendauer (t_{TSZ}) des Zündfunkens (Z) der jeweiligen Zündkerze (3) mit steigender Last der Brennkraftmaschine auf eine zunehmend kürzere Zeit (t_{begr.}) seit dem Zündzeitpunkt (t_{Z}) bzw. auf eine einem zunehmend kleineren Kurbelwinkel seit dem Zündzeitpunkt (t_{Z}) entsprechende Zeit (t_{begr.}) begrenzt wird.

3. Verfahren nach Anspruch 1 oder 2,
dadurch gekennzeichnet, daß die Begrenzung der Funkendauer (t_{TSZ}) durch kurzzeitiges Verbinden des ansonsten mit dem Hochspannungsanschluß der jeweiligen Zündkerze (3) verbundenen Anschlusses der Zündspule der Hochspannungstransistorspulenzündeinrichtung (1) mit Erdpotential erfolgt.
